# EUROPÄISCHE PATENTANMELDUNG

(11) **EP 0 848 511 A2**
(43) Veröffentlichungstag der Anmeldung: **17.06.1998**
(21) Anmeldenummer: 97114145.2
(22) Anmeldetag: 16.08.1997
(51) Int. Cl.: H04B 10/17

(54) **Einrichtung zum Ein- und Auskoppeln optischer Signale zweier Übertragungskanäle**

(30) Priorität: 10.12.1996 DE 19651236
(71) Anmelder: ROBERT BOSCH GMBH, 70442 Stuttgart (DE)
(72) Erfinder: Kremers, Ernst, 71540 Murrhardt (DE)

(57) **Zusammenfassung**

Einrichtung mit optischem Verstärker, die zum Ein- und Auskoppeln von optischen Signalen dient. Sie weist vor und hinter dem Verstärker (V) je einen optischen Koppler (K1, K2) auf. Der Verstärker ist für mehr als zwei Übertragungskanäle (n, o) unterschiedlicher Wellenlängenbereiche vorgesehen. Der erste Koppler (K1) ist zum Einkoppeln von über den Verstärker zu führenden Signalen eines ersten der Übertragungskanäle (o) vorgesehen. Der zweite Koppler (K2) dient zum Auskoppeln von über den Verstärker geführten Signalen eines zweiten der Übertragungskanäle (m).
Die Einrichtung ist als Add/Drop-Multiplexer geeignet und ermöglicht auf einfache Weise das Ein- und Auskoppeln von Übertragungskanälen unter Verwendung nur eines optischen Verstärkers je Übertragungsrichtung.

## Beschreibung

### Stand der Technik

Die Erfindung geht von der Gattung aus, wie im unabhängigen Anspruch 1 angegeben.
In der EP 0 440 276 B1 ist eine optische Lichtwellenleiter-Übertragungsstrecke für Telecommunikationssignale, mit einem optischen Verstärker beschrieben, bei der in Verstärkernähe vor und hinter dem Verstärker jeweils über einen Koppler Servicesignale ein- und ausgekoppelt werden, die eine andere Wellenlänge aufweisen wie die Telecommunikationssignale. Dabei werden zwar die Telecommunikationssignale, nicht aber die Servicesignale über den Verstärker geführt.

Bei einem sogenannten Add/Drop-Multiplexer ist es üblich, im Verlauf einer optischen Übertragungsstrecke zwei optische Verstärker kurz hintereinander anzuordnen und dazwischen zwei Koppler, voneinander durch ein Filter getrennt, vorzusehen; dabei dient der erste Koppler zum Auskoppeln der Signale eines ersten Übertragungskanals und der zweite Koppler zum Einkoppeln der Signale eines anderen Übertragungskanals, der die selbe oder eine andere Wellenlänge wie der erste Übertragungskanal haben kann. Das zwischengeschaltete Filter hat Sperrwirkung für die vom ersten Koppler ausgekoppelten Signale.

### Vorteile der Erfindung

Der Anmeldungsgegenstand mit den Merkmalen des Anspruches 1 hat folgenden Vorteil:
Die Einrichtung ermöglicht auf einfache Weise sowohl die Verstärkung mehrerer Übertragungskanäle durch denselben optischen Verstärker als auch das Ein- und Auskoppeln von Übertragungskanälen unter Verwendung nur eines optischen Verstärkers je Übertragungsrichtung. Dabei belegen die Signale des eingekoppelten Übertragungskanals einen Wellenlängenbereich (Frequenzbereich), der weder vom ausgekoppelten Übertragungskanal noch von den restlichen Übertragungskanälen belegt ist, für die der Verstärker vorgesehen ist.

Die notwendige Selektion kann von der Ein- beziehungsweise Auskopplung getrennt erfolgen.

Vorteilhafte Weiterbildungen sind in den abhängigen Ansprüchen angegeben, deren Merkmale auch, soweit sinnvoll, miteinander kombiniert werden können.

### Zeichnung

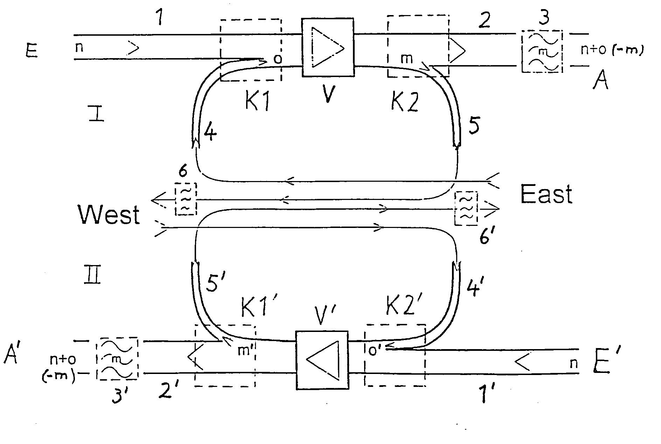

Die Figur zeigt eine schematische Darstellung eines bevorzugten Ausführungsbeispiels der Erfindung.

### Aufbau des bevorzugten Ausführungsbeispiels

Zwischen einem Eingang E und einem Ausgang A befindet sich eine Einrichtung mit einer optischen Übertragungsstrecke für Signale der Telekommunikation. Auf einen Lichtwellenleiter 1 folgt ein optischer Koppler K1, bevorzugt ein Faser-Schmelzkoppler, dem sich ein optischer Verstärker V anschließt. Dessen Ausgang ist ein optischer Koppler K2 nachgeschaltet, der auf einen Lichtwellenleiter 2 führt. Dieser Lichtwellenleiter 2 ist über ein nicht zwingend vorzusehendes Sperrfilter 3 mit dem Ausgang A der Einrichtung verbunden.

Der Koppler K1 weist eine Zuführung 4 auf, zu welcher optische Signale aus der Richtung East geführt sind. Der optische Koppler K2 hat einen Abzweig 5, von dem optische Signale in die Richtung West gelangen. In dieser Richtung ist (nicht zwingend) ein optisches Bandpaßfilter 6 vorgesehen, das (insbesondere wenn der Koppler K2 bezüglich seines Abzweiges 5 nicht frequenzselektiv ist) durchstimmbar sein kann.

Bis hierher bezog sich die Beschreibung des Ausführungsbeispiels der Erfindung auf eine Einrichtung mit der Bezeichnung I, die für eine bestimmte Übertragungsrichtung von Signalen wenigstens eines Kanales n vom Eingang E zum Ausgang A vorgesehen ist.

Eine prinzipiell gleiche Einrichtung II ist unterhalb der Einrichtung I dargestellt, um die Übertragung in umgekehrter Richtung zu ermöglichen. Die Bezugszeichen der Einrichtung II entsprechen denjenigen der Einrichtung I, sind jedoch jeweils mit einem Apostroph versehen. Auch für die Einrichtung II kann ein Bandpaßfilter 6' vorgesehen sein, und zwar in der Richtung East.

### Funktion des bevorzugten Ausführungsbeispiels:

Wegen der gleichen Funktion der Einrichtungen I und II wird im folgenden nur noch die Funktion der Einrichtung I beschrieben. Über den Lichtwellenleiter 1 werden in der angedeuteten Richtung Signale wenigstens eines Übertragungskanals n dem optischen Koppler K1 zugeführt. Über die Zuführung 4 werden Signale eines Übertragungskanals o aus der Richtung East hinzugefügt. Durch den optischen Verstärker sind demnach die Signale mindestens der Übertragungskanäle n und o zu verstärken. Durch den folgenden optischen Koppler K2 werden über den Abzweig 5 die Signale eines Übertragungskanals m abgezweigt, bei dem es sich um einen der n Übertragungskanäle handelt, die vom Eingang E her über den Lichtwellenleiter 1 zugeführt werden. Vom Abzweig 5 gelangen die Signale (durch das Bandpaßfilter 6 auf die Bandbreite des Übertragungskanals m beschränkt) zur Richtung West. Die Signale der restlichen Kanäle verlassen den Koppler K2 über den Lichtwellenleiter 2. Je nach dem, wie wellenlängenselektiv der Koppler K2 ist, werden im Lichtwellenleiter 2 die Übertragungskanäle n (ohne m) und o oder aber n (mit m) und o geführt. Für den letzten Fall sorgt das Sperrfilter 3 dafür, daß die Signale des Übertragungskanals m herausgefiltert werden, so daß letztlich am Ausgang A nur noch Signale der Übertragungskanäle n (ohne m) und o bleiben.

Zwar ist bei der Einrichtung nach der Erfindung die Anzahl der über den Verstärker geführten Übertragungskanäle größer als die Anzahl der Übertragungskanäle am Eingang und/oder Ausgang der Einrichtung, was aber nur dann zu einer Beschränkung der Anzahl der übertragbaren Übertragungskanäle führt, wenn die Verstärkerbandbreite die Grenze für die Kanalanzahl bildet. Wichtiger ist es, daß durch die Erfindung die Anzahl der erforderlichen optischen Verstärker und damit die Kosten reduziert werden. Abwandlungsmöglichkeiten:

Selbst wenn der Koppler K2 so wenig wellenlängenselektiv ist, daß auf den Lichtwellenleiter 2 auch noch Signale des Übertragungskanals m gelangen, kann es sinnvoll sein, das Sperrfilter 3 fortzulassen, wenn die Signale des Übertragungskanales m in mehrere Richtungen verteilt werden sollen, nämlich in Richtung West und in der Richtung hinter dem Ausgang A.

Wenn das Bandpaßfilter 6 abstimmbar ist, kann darüber eine Kanalauswahl erfolgen, sofern der Koppler K2 so beschaffen ist, daß über den Abzweig 5 Signale mehrerer Übertragungskanäle fließen.

Dieses Beispiel veranschaulicht, daß die Bezeichnungen n, o, m jeweils nicht nur für einen Übertragungskanal, sondern auch für mehrere Übertragungskanäle stehen können.

## Patentansprüche

1. Einen optischen Verstärker (V) enthaltende Einrichtung zum Ein- und Auskoppeln von optischen Signalen, die in Übertragungsrichtung gesehen vor und hinter dem Verstärker (V) je einen optischen Koppler (K1, K2) aufweist,
dadurch gekennzeichnet,
• daß der Verstärker (V) für mindestens zwei Übertragungskanäle (o, n) unterschiedlicher Wellenlängenbereiche vorgesehen ist,
• daß der vor dem Verstärker (V) angeordnete Koppler (K1) zum Einkoppeln von über den Verstärker (V) zu führenden Signalen eines ersten der Übertragungskanäle (o) vorgesehen ist und
• daß der hinter demselben Verstärker (V) angeordnete Koppler (K2) zum Auskoppeln von über den Verstärker (V) geführten Signalen eines zweiten der Übertragungskanäle (m) vorgesehen ist.

2. Einen optischen Verstärker (V) enthaltende Einrichtung zum Ein- und Auskoppeln von optischen Signalen, die einerseits zwischen ihrem Eingang (E) und dem Verstärker (V) einen ersten optischen Koppler (K1) und andererseits zwischen dem Verstärker (V) und ihrem Ausgang (A) einen zweiten optischen Koppler (K2) aufweist, dadurch gekennzeichnet,
• daß der Verstärker (V) für mindestens zwei Übertragungskanäle (n, o) unterschiedlicher Wellenlängenbereiche vorgesehen ist,
• daß der erste Koppler (K1) zum Einkoppeln von über den Verstärker (V) zu führenden Signalen eines ersten der Übertragungskanäle (o) vorgesehen ist,
• daß der zweite Koppler (K2) zum Auskoppeln von über den Verstärker (V) geführten Signalen eines zweiten der Übertragungskanäle (m) vorgesehen ist und
• daß die Anzahl der über den Verstärker (V) geführten Übertragungskanäle (n, o) größer ist als die Anzahl der Übertragungskanäle am Eingang (E) und/oder Ausgang (A) der Einrichtung.

3. Einrichtung nach Anspruch 1 oder 2, dadurch gekennzeichnet, daß sie Teil eines Add/Drop-Multiplexers ist.

4. Einrichtung nach einem der vorangehenden Ansprüche, dadurch gekennzeichnet, daß wenigstens einer der Koppler (K1, K2) ein Faserkoppler ist.

5. Einrichtung nach einem der vorangehenden Ansprüche, dadurch gekennzeichnet, daß wenigstens einer der Koppler (K1, K2) wellenlängenselektiv ist.

6. Einrichtung nach einem der vorangehenden Ansprüche, dadurch gekennzeichnet, daß dem Abzweig (5) des auskoppelnden Kopplers (K2) ein wellenlängenselektives Bandpaßfilter (6) für die ausgekoppelten Signale nachgeschaltet ist.

7. Einrichtung nach Anspruch 6 und einem der Ansprüche 1 bis 4, dadurch gekennzeichnet, daß das Bandpaßfilter (6)abstimmbar ist.

8. Einrichtung nach einem der vorangehenden Ansprüche, dadurch gekennzeichnet, daß hinter dem auskoppelnden Koppler (K2) im Übertragungsweg für die nicht ausgekoppelten Signale ein Sperrfilter (3) mit Sperrungwirkung für den Übertragungskanal (m) der ausgekoppelten Signale vorgesehen ist.

9. Einrichtung nach einem der vorangehenden Ansprüche, dadurch gekennzeichnet, daß sie für Übertragungskanäle (n, o, m) vorgesehen ist, deren Wellenlängen im selben Übertragungsfenster eines Lichtwellenleiters liegen.

10. Einrichtung nach einem der vorangehenden Ansprüche, dadurch gekennzeichnet, daß sie für ein Kommunikationsnetz vorgesehen ist und die Koppler (K1, K2) am selben Ort angeordnet sind wie der Verstärker (V).

11. Einrichtung nach einem der vorangehenden Ansprüche, dadurch gekennzeichnet, daß die Koppler (K1, K2) im selben Gerät angeordnet sind wie der Verstärker (V).

12. Einrichtung nach einem der vorangehenden Ansprüche, dadurch gekennzeichnet, daß sie zusammen mit einer gleichen Einrichtung (II) für die entgegengesetzte Übertragungsrichtung im selben Gerät angeordnet ist.

13. Einrichtung nach einem der vorangehenden Ansprüche, dadurch gekennzeichnet, daß der Verstärker (V) für mehr als zwei Übertragungskanäle (o, n) unterschiedlicher Wellenlängenbereiche vorgesehen ist.
